# EUROPÄISCHE PATENTSCHRIFT

(11) **EP 2 421 781 B1**
(45) Veröffentlichungstag und Bekanntmachung des Hinweises auf die Patenterteilung: **03.06.2015**
(21) Anmeldenummer: 10726889.8
(22) Anmeldetag: 20.04.2010
(51) Int. Cl.: B65H 54/42, B65H 63/00, F16F 15/36, B65H 75/14

(54) **SYSTEM UMFASSEND EINEN DREHANTRIEB UND EINE WICKELGUTSPULE ZUR AUFNAHME VON LADE- UND VERSEILGUT**
SYSTEM COMPRISING A ROTARY DRIVE AND A WINDING MATERIAL SPOOL FOR RECEIVING CARGO AND STRANDING PRODUCTS
SYSTÈME COMPRENANT UN DISPOSITIF D'ENTRAÎNEMENT ROTATIF ET UN ENROULEUR POUR MATÉRIAU À ENROULER ET ANALOGUES

(30) Priorität: 24.04.2009 DE 102009018851
(43) Veröffentlichungstag der Anmeldung: 29.02.2012
(73) Patentinhaber: nkt cables GmbH & Co. KG, 51061 Köln (DE)
(72) Erfinder: KUMPF, Friedheim, 50259 Pulheim (DE); RASMUSSEN, Anders, 51429 Bergisch-Gladbach (DE)
(86) Internationale Anmeldenummer: PCT/EP2010/002404
(87) Internationale Veröffentlichungsnummer: WO 2010/121780

(56) Entgegenhaltungen:
- EP-A2- 0 234 844
- EP-A2- 0 873 960
- WO-A1-92/07136
- DE-A1- 1 602 319
- DE-A1- 2 446 076
- DE-A1- 10 128 077
- FR-A- 796 221
- JP-A- 8 011 128

## Beschreibung

Die Erfindung betrifft ein System umfassend einen Drehantrieb und eine Wickelgutspule zur Aufnahme von Lade- oder Verseilgut, insbesondere für langgestrecktes, flexibles Verseilgut, insbesondere Elektrokabel, Schlauch oder Halbfertigfabrikat.

Derartige Wickelgutspulen sind bekannt. Sie bestehen aus zwei Trommelscheiben einheitlicher Größe, zwischen denen ein zylindrischer Trommelkern vorhanden ist, auf den das Ladegut wickelbar ist; beispielsweise DE 197 82 138 T1.

Beim Be- oder Entladen einer Wickelgutspule mit Verseilgut entstehen mechanische Exzentrizitäten und Unwucht in Abhängigkeit von z.B. Durchmesser (Spulengröße), Produktabmessung, Produktgewicht, Art des Wickelprozesses, Zunahme der Wickellagen, Länge des Wickelguts etc. Dies kann in Abhängigkeit von der installierten Antriebsleistung, bzw. von den Antriebsdrehmomenten zu ungleichförmigen Rundlaufeigenschaften und im Extremfall bis zum Stillstand oder auch zum Zerreißen des Ladegutes führen. Damit sind Verschleiß und Überlastung der Antriebe verbunden. Ein programmgesteuerter Antrieb zum gesteuerten Auf- und Abwickeln einer Wickelgutspule mit konstanter Zugkraft wird in der EP 0 873960 A2 dargestellt. Weiterhin sind Drehantriebe für Wickelgutspulen bekannt, die mit einer Sensoreinrichtung ausgestattet sind zur Erfassung von während des Betriebs auftretenden Schwingungen (WO 92-071136 A1, DE 1012877 A1, EP 0 234844 A2).

Grundsätzlich können alle Drehsysteme statisch ausgewuchtet werden. So zeigt die DE 16023319 A1 Aufnahmeöffnungen am Spulenflansch, in die Ausgleichsgewichte zum Unwuchtausgleich eingelegt werden können. Eine solche statische Maßnahme kann nur bei Stillstand und in der Regel nur bei der leeren Wickelgutspule vorgenommen werden.

Mit statischen Maßnahmen wird allerdings nicht das Problem behoben, dass während des Beitriebs Unwucht und Unsymmetrien auftreten. Bei Wickelgutspulen für Verseilgut, welches mit hoher Geschwindigkeit geladen wird, wurden schon Maßnahmen zum Ausgleich von Unwucht vorgeschlagen. Ein solches Verfahren (DE 2446076 A1) kann darin bestehen, dass während der Rotation der Wickelgutspule, sozusagen dynamisch, freibewegliche mitrotierende Massen sich selbsttätig auf ihrer Rotationsbahn verteilen, was zu einer Verlagerung des Schwerpunkts der rotierenden Anordnung wieder zurück in eine Drehachse mit verminderter Unwucht führt.

Es sind Wickelgutspulen bekannt, die mindestens einen Behälter zur Aufnahme eines Zusatzgewichts aufweisen, mit dem eine Unwucht ausgleichbar ist (JP 8011128 A, FR 976 221 A).

Der Erfindung liegt die Aufgabe zugrunde, Ungleichförmigkeiten im Rundlauf von Wickelgutspulen beim Be- oder Entladen mit Lade- oder Verseilgut kompensierbar zu gestalten. Ausgehend von einer typischen Wickelgutspule, beispielsweise von bekannten Kabelspulen wird die Aufgabe erfindungsgemäß durch die Merkmale des unabhängigen Anspruches gelöst, während den Unteransprüchen vorteilliarte Weiterbildungen der Erfindung zu entnehmen sind.

Der Kern der Erfindung liegt darin, dass Ungleichförmigkeiten im Rundlauf und Unwuchten bei Wickelgutspulen durch variable, im Stillstand oder im Betrieb veränderbare Auswuchtgewichte kompensiert werden können.

Die Erfindung lässt sich anwenden auf Wickel- und Trommelsysteme aller Art. Wobei bei Wickelsystemen vorzugsweise Elektrokabel, Draht, Papier, Kunststoffrohre als Wickelgut infrage kommen. Das Wickelgut kann rund, flach oder eckig ausgebildet sein.

Eine erfindungsgemäße Wickelgutspule besteht aus zwei endständigen Trommelscheiben einheitlichen Durchmessers, zwischen denen ein zylindrischer Trommelkern vorhanden ist, auf den Lade- oder Wickelgut wickelbar ist. Die Wickelgutspule ist von einem externen elektrischen Drehantrieb drehbar antreibbar. Der Drehantrieb ist mit einer Sensoreinrichtung ausgestattet, die eine Masse-Unwucht beim Be- oder Entladen anzeigbar macht, wenn bei der Drehung eine Unwucht auftritt.

Im Innern des Trommelkerns ist mindestens ein Behälter zur Aufnahme mindestens eines Zusatzgewichts vorhanden, mit dem eine Unwucht ausgleichbar ist.

Durch die Beschickung der Wickelgutspule, beispielsweise beim Wickeln eines Elektrokabels mit großem Durchmesser und entsprechend großem Gewicht, kann dann eine Unsymmetrie der Beladung auftreten, wenn der Wechsel der Windungen von einer ersten Lage auf eine zweite Lage das Kabel nicht unmittelbar auf Lücke der darunter befindlichen Windungen zu liegen kommt. Das Kabel überkreuzt darunter liegenden Kabelabschnitte. Die mit dem Drehantrieb gekoppelte Signalisierung in Form einer elektronischen Überwachung liefert aus den erfassten Drehmomenten an den Antrieben oder aus extremen Änderungen oder Schwankungen der Strom- bzw. Leistungsaufnahme des Drehantriebs ein entsprechendes Signal.

Das Signal kann als Alarmmeldung ausgestaltet sein, so dass sich eine Aussage über die Größe der Unwucht (notwendige Masse eines Ausgleichs- oder Zusatzgewichts) und über die Lage der Unsymmetrie ergibt. Aus diesem Sachverhalt entnimmt der Betreiber Hinweise über die Art der Unwucht und kann Maßnahmen zum Ausgleich der Unwucht vornehmen. Entsprechend können Behälter mit Zusatzgewicht beladen oder entladen werden.

Bei Auftreten einer Unwucht durch ungleichmäßige Massenverteilung kann die Anordnung stillgesetzt werden, um den Unwuchtausgleich vorzunehmen. Vorzugsweise sind mehrere über den Durchmesser verteilte Behälter oder Kammern eingebaut. Diese können relativ schnell gefüllt und geleert werden. Nach Beenden des Unwuchtausgleiclis kann der Antriebsmechanismus unmittelbar wieder in Gang gesetzt werden.

Bei weiterer Ausgestaltung der Anordnung kann auch ein automatischer Unwuchtausgleich während des Betriebs der Wickelgutspule eingerichtet sein. Hierbei kann man davon ausgehen, dass die Be- und Entladung insbesondere mit Wickelgut mit großer Masse mit relativ kleinen Drehzahlen stattfindet, so dass genügend Zeit vorhanden ist, den Unwuchtausgleich während einiger weniger Umdrehungen der Wickelgutspule vornehmen zu können, ohne dass der Betrieb stillgesetzt wird.

Folgende Vorteile der Erfindung lassen sich aufzeigen: Reduzierung von Wickel-Antriebsleistungen, Vermeidung von Durchrutschen bei Reibradantrieben, gleichmäßiger Spulen-Rundlauf, gleichmäßige Wickel-Zugkraft, Auswuchtgewichte sind variabel anpassbar auf unterschiedliche Unwuchten, es ist automatische Unwuchtkompensation möglich.

Vorzugsweise ist eine Vorrichtung zum Aufständern der Wickelgutspule vorhanden, die derart ausgebildet ist, dass Randkränze der Trommelscheiben auf Rollen gelagert sind, wobei die Lage der Achse der Wickelgutspule waagerecht ist. Allerdings sind auch Anwendungen möglich, bei denen die Achse der Wickelgutspule senkrecht liegen kann.

Der Drehantrieb besteht aus mindestens einer antreibbaren Rolle, die mit mindestens einem Radkranz einer der Trommelscheiben in Eingriff gelangt. Zur Erzeugung der Kraftübertragung kann mindestens ein Radkranz gezahnt, profiliert oder glattrandig ausgebildet sein. Insbesondere haben als Kabelspulen eingesetzte Wickelgutspulen glattrandige Radkränze, so dass dort der Drehantrieb als Reibradantrieb arbeitet.

Als Alternative der Erfindung kann auch der externe Drehantrieb so ausgebildet sein, dass er an einer Nabe, bzw. einer Drehachse der Wickelgutspule angreift.

Zur Aufnahme von Zusatzgewichten kann ein einziger Behälter ringförmig um die Drehachse herum ausgebildet sein. wobei der Behälter in einzelne Kammern unterteilt ist. Jede einzelne Kammer kann Zusatzgewichte aufnehmen. Es ist vorgesehen, dass mehrere Behälter über den Umfang verteilt vorhanden sind, also die Einzelkammern getrennt voneinander angeordnet sind. Im Folgenden sollen unter 'Behälter' sowohl Einzelkammern als auch einzelne Behälter verstanden werden. Die Behälter sollten parallel zur Achse der Wickelgutspule angeordnet sein. Kammern oder Behälter können in gerader oder in ungerader Anzahl (symmetrisch oder unsymmetrisch) parallel zur Achse der Wickelgutspule angeordnet sein. Die Behälter liegen im zylindrischen Trommelkern möglichst mit großem Abstand zur Drehachse, so dass die Drehmomente der Zusatzgewichte einen möglichst großen Wert haben.

Die Behälter sind zur Aufnahme einer Flüssigkeit ausgebildet. Vorzugsweise soll Wasser als Zusatzgewicht verwendet werden, so dass man von Flüssigkeitstanks sprechen kann. Zum Füllen und Entleeren hat jeder Behälter oder jede Kammer vorzugsweise mindestens ein Füllventil. Weiterhin können jeweils an den Behältem Entlüftungsventile vorhanden sein.

Der Füll- und Entleerungsvorgang mit Flüssigkeit erfolgt nach der Signalisierung der Sensoreinrichtung. Dieser Vorgang kann nach Stillsetzen der Drehung der Wickelgutspule vorgenommen werden, wobei an die Füllventile jeweils ein Flüssigkeitsvorrat über einen Schlauch angeschlossen wird. In einer einfachen Ausführungsart kann der Unwuchtausgleich manuell erfolgen. In einer weitergehenden Ausgestaltung kann der Unwuchtausgleich auch automatisch vorgenommen werden. Hierbei kann vorgesehen sein, dass den Behältern oder den Kammern auch während der Drehung (beim Beladen oder Entladen mit Verseilgut) Flüssigkeit zuführbar ist. Hierzu sollte eine Drehdurchführung für die Flüssigkeit an mindestens einer Nabe der Wickelgutspule vorhanden sein, von der aus eine Flüssigkeitsverteilung zu allen Behältern oder Kammern erfolgen kann. Hierdurch können bestimmte Flüssigkeitsmengen durch Beschalten der Drehdurchführung und der zugehörigen Füllventile auf unterschiedliche Behälter oder Kammern verteilt werden.

Vorzugsweise soll die erfindungsgemäße Wickelgutspule als Kabelspule eingesetzt werden. Insbesondere bei der Bevorratung von Kabeln mit großem Durchmesser ist es wichtig, dass auftretende Unsymmetrie und Unwucht ausgleichbar ist, weil ansonsten der Drehantrieb

Typische Abmessungen einer Wickelgutspule: Länge 8,2 m: Durchmesser Trommelscheibe 7,5 m: Durchmesser Trommelkern 4 m; die Wickelgutspule soll Kabel aufnehmen können mit Durchmessern von 40 bis 300 mm: Abmessung eines Wassertanks: Länge ca 7,5 m: Durchmesser 30 cm: Füllvolumen ca. 500 cm³, entspricht ca. 500 kg Wassermenge.

Weitere Einzelheiten und Vorteile der Erfindung ergeben sich aus dem folgenden, anhand von Figuren erläuterten Ausführungsbeispiel. Es zeigen
Figur 1: eine Wickelgutspule mit geöffnetem Trommelkern;
Figur 2: ein System von 12 Behältern (Wassertanks);
Figur 3A und 3B: zwei Ansichten auf je eine Trommelscheibe und
Figur 4: einen Trommelkern.

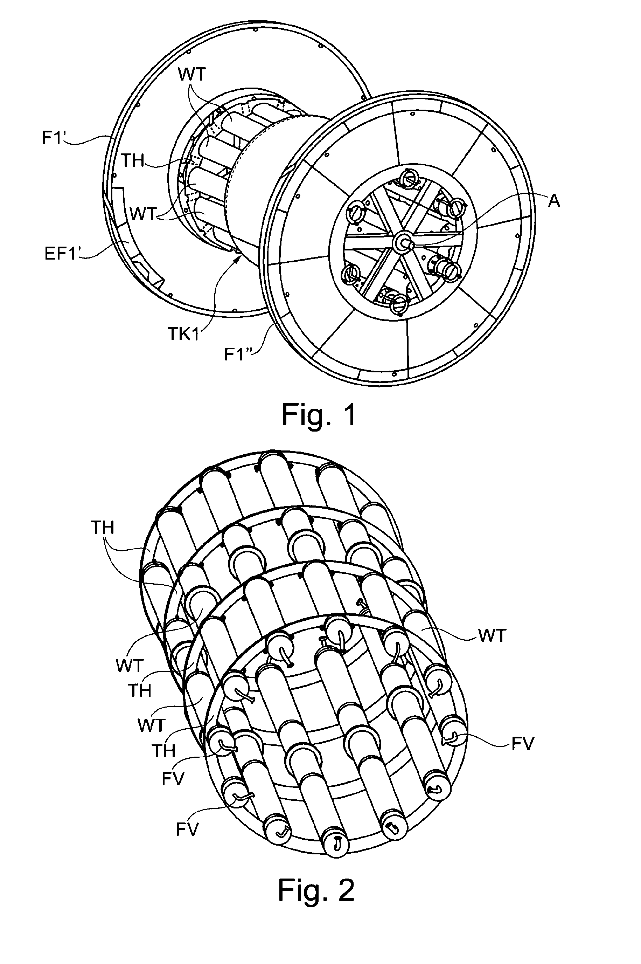

Die Fig. 1 zeigt eine Wickelgutspule mit im hinteren Drittel entfernter Mantelfläche des Trommelkerns TK. Im geöffneten Bereich der Mantelfläche sind (zum Teil) sieben als Zylinder ausgebildete Behälter WT sichtbar. Die Behälter WT liegen parallel zur Achse A (Symmetrie- oder Zylinderachse) der Wickelgutspule und sind mit Wasser befüllbar. Die Wickelgutspule hat zwei endständige Trommelscheiben F1', F1" mit einheitlichen Durchmessern. Zwischen den Trommelscheiben ist ein zylindrischer Trommelkern TK vorhanden, auf den Lade- oder Verseilgut wickelbar ist. Die Wickelgutspule wird von einem externen Drehantrieb A1 drehend angetrieben. Zeichnerisch ist nicht dargestellt, dass der Drehantrieb A1 mit einer Sensoreinrichtung ausgestattet ist, die eine Unwucht beim Be- oder Entladen anzeigbar macht, wenn eine Unwucht auftritt, dass im Innern des Trommelkerns TK mindestens ein Behälter WT zur Aufnahme mindestens eines Zusatzgewichts vorhanden ist, mit dem eine Unwucht ausgleichbar ist.

Auf der Vorderseite der Wickelgutspule sind zwischen den Speichen Sp Halter H erkennbar, in denen Ventile zur Füllung mit Wasser eingesetzt sind. Die Wickelgutspule ist derart aufgeständert, dass die Radkränze RK', RK" der Trommelscheiben F1', F1" auf Rollen A1 gelagert sind. Mindestens eine der Rollen A1 ist antreibbar und gelangt somit mit dem Radkranz RK', RK" in Eingriff. In Fig. 1 sind die Radkränze RK', RK" der Trommelscheiben F1', F1" glattrandig gezeichnet. Die Rollen A1 dienen der Lagerung, der Führung und dem Antrieb der Radkränze. Es können durchaus mehr als vier Rollen A1 (wie in Fig. 1 angedeutet) vorhanden sein.

In der Fig. 2 ist ein System von zwölf Wassertanks WT dargestellt, welches im Innern des Trommelkerns TK untergebracht wird. Die Wassertanks sind untereinander in einem Gerüst von Tankhaltern TH befestigt. Am Vorderende der Wassertanks WT sind jeweils Füllventile FV erkennbar.

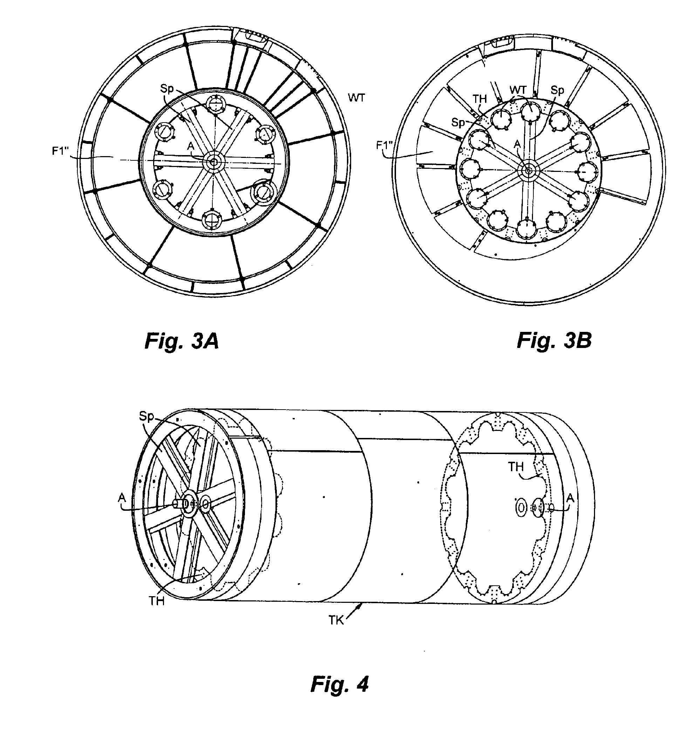

Die Figur 3A und 3B zeigen zwei Ansichten auf je eine Trommelscheibe F1',F1". Der Trommelkern TK wird vorn und hinten von einem System aus Speichen Sp abgeschlossen. Vergleichbar mit Fig. 1 sind an der Vorderseite der Trommelscheibe sechs Halter H gezeichnet, in denen die Behälter WT gefasst sind, und in denen die Füllventile von vorn erreichbar sind. In Fig. 3B sind zwölf Behälter WT erkennbar, die von einem Tankhalter TH getragen werden. An der Trommelscheibe in Fig. 3B ist eine Ablaufschnecke vorhanden, welche sich spiralförmig von außen zur Mantelfläche des Trommelkerns hin fortsetzt. Auf der Ablaufschnecke kann beispielsweise ein Elektrokabel von außen nach innen zur Mantelfläche des Trommelkerns geführt werden.

In Fig. 4 ist ein zylindrischer Trommelkern TK ohne endständige Trommelscheiben zu erkennen, wobei allerdings das System der Wassertanks nicht eingezeichnet ist. Rechts und links sind die Tankhalter TH erkennbar.

### Bezugszeichen

- A: Achse Wickelgutspule
- A1: Antrieb, Rollen für Antrieb
- F1', F1": Trommelscheibe (Flansch)
- RK', RK": Randkranz
- TK: Trommelkern (zylindrisch)
- S: Ablaufschnecke
- Sp: Speichen
- H: Halter für Einzelbehälter
- TH: Tankhalter für das System der Behälter
- WT: Behälter, Wassertank
- FV: Füllventil

## Patentansprüche

1. System umfassend eine Wickelgutspule und einen Drehantrieb, wobei die Wickelgutspule insbesondere für langgestrecktes, flexibles Lade- oder Verseilgut, aus zwei endständigen Trommelscheiben (F1', F1") einheitlichen Durchmessers besteht, zwischen denen ein zylindrischer Trommelkern (TK) vorhanden ist, auf den Verseilgut wickelbar ist, wobei die Wickelgutspule vom externen Drehantrieb (A1) antreibbar ist,
wobei im Innern des Trommelkerns (TK) mehrere Behälter (WT) zur Aufnahme eines aus Flüssigkeit bestehenden Zusatzgewichts vorhanden sind, mit dem eine Unwucht ausgleichbar ist,
**dadurch gekennzeichnet, dass** die Behälter (WT) über den Umfang verteilt und parallel zur Achse (A) der Wickelgutspule angeordnet sind,
und dass der Drehantrieb (A1) mit einer Sensoreinrichtung ausgestattet ist, die eine Unwucht beim Be- oder Entladen anzeigbar macht.

2. System nach Anspruch 1, **dadurch gekennzeichnet, dass** jeder Behälter (WT) mit mindestens einem Füllventil (FV) versehen ist.

3. System nach Anspruch 2, **dadurch gekennzeichnet, dass** eine Flüssigkeitsmenge zum ausgleichen der Unwucht automatisch auf mehrere Behälter (WT) verteilbar ist.

4. System nach einem der Ansprüche 1 bis 3, **dadurch gekennzeichnet, dass** der Drehantrieb (A1) mit einer Signalisierung in Form einer elektronischen Überwachung gekoppelt ist, welche aus erfassten Drehmomenten an den Antrieben oder aus Änderungen oder Schwankungen von Strom- oder Leistungsaufnahme des Drehantriebs (A1) ein Signal liefert, das als Alarmmeldung ausgestaltet ist, sodass sich eine Aussage über die Größe der Unwucht und über die Lage der Unsymmetrie ergibt.

5. System nach einem der Ansprüche 1 bis 4, **dadurch gekennzeichnet, dass** der Drehantrieb (A1) so ausgebildet ist, dass er an einer Nabe oder einer Drehachse der Wickelgutspule angreift.

6. System nach einem der Ansprüche 1 bis 4, weiter umfassend eine Vorrichtung zum Aufständern der Wickelgutspule, die derart ausgebildet ist, dass Radkränze (RK', RK") der Trommelscheiben (F1', F1") auf Rollen (A1) gelagert sind.

7. System nach Anspruch 6, **dadurch gekennzeichnet, dass** der Drehantrieb aus mindestens einer antreibbaren Rolle (A1) besteht, die mit mindestens einem Radkranz (RK', RK") einer Trommelscheibe (F1', F") in Eingriff gelangt.

8. System nach Anspruch 7, **dadurch gekennzeichnet, dass** mindestens ein Radkranz (RK', RK") einer Trommelscheibe (F1', F1") gezahnt, profiliert oder glattrandig ausgebildet ist.

## Claims

1. A system comprising a winding material spool and a rotary drive, the winding material spool, in particular for elongated, flexible cargo or stranding products, consisting of two drum discs (F1', F1") located at the ends and having the same diameter, between which a cylindrical drum core (TK) is present onto which stranding product can be wound, the winding material spool being able to be driven by the external rotary drive (A1),
a number of containers (WF) for receiving an additional weight consisting of a liquid being provided within the drum core (TK), with which weight an imbalance can be compensated for,
**characterised in that** the containers (WT) are distributed around the circumference and are arranged parallel to the axis (A) of the winding material spool,
and that the rotary drive (A1) is equipped with a sensor device that makes it possible to indicate an imbalance during loading or unloading.

2. The system according to Claim 1, **characterised in that** each container (WT) is provided with at least one filling valve (FV).

3. The system according to Claim 2, **characterised in that** a quantity of liquid can be distributed automatically to a number of containers (WT) in order to compensate for the imbalance.

4. The system according to any of Claims 1 to 3, **characterised in that** the rotary drive (A1) is coupled to signalling in the form of electronic monitoring which, from torques detected on the drives or from changes or fluctuations of current or power consumption of the rotary drive (A1), supplies a signal that is in the form of an alarm message so that information is provided on the extent of the imbalance and the position of the nonsymmetry.

5. The system according to any of Claims 1 to 4, **characterised in that** the rotary drive (A1) is designed such that it acts on a hub or an axis of rotation of the winding material spool.

6. The system according to any of Claims 1 to 4, further comprising an apparatus for supporting the winding material spool which is designed such that wheel rims (RK', RK") of the drum discs (F1', F1") are mounted on rollers (A1).

7. The system according to Claim 6, **characterised in that** the rotary drive consists of at least one drivable roller (A1) that engages with at least one wheel rim (RK', RK") of a drum disc (F1', F").

8. The system according to Claim 7, **characterised in that** at least one wheel rim (RK', RK") of a drum disc (F1', F1") is toothed, profiled or has a smooth edge.

## Revendications

1. Système comportant un tambour d'enroulement et un dispositif d'entraînement en rotation, le tambour d'enroulemerit, notamment pour des produits à transporter ou de câblage souples et de grande longueur, étant composé de deux joues de tambour terminales (F1', F1") de diamètre unique entre lesquels est présente une partie centrale du tambour (TK) cylindrique sur laquelle le produit de câblage peut être enroulé, le tambour d'enroulement pouvant être entraîné par le dispositif d'entraînement en rotation (A1) externe,
dans lequel plusieurs contenants (WT) sont présents à l'intérieur de la partie centrale du tambour (TK) pour contenir un poids supplémentaire qui est constitué par un fluide et permet de compenser un déséquilibre,
**caractérisé en ce que** les contenants (WT) sont répartis sur la circonférence et parallèlement à l'axe (A) du tambour d'enroulement,
et **en ce que** le dispositif d'entraînement en rotation (A1) est pourvu d'un dispositif de détection qui permet de signaler un déséquilibre lors du chargement ou du déchargement.

2. Système selon la revendication 1, **caractérisé en ce que** chaque contenant (WT) est pourvu d'au moins une vanne de remplissage (FV).

3. Système selon la revendication 2, **caractérisé en ce qu'**une quantité de fluide peut être repartie automatiquement sur plusieurs contenants (WT) pour compenser le déséquilibre.

4. Système selon l'une des revendications 1 à 3, **caractérisé en ce que** le dispositif d'entraînement en rotation (A1) est couplé à un dispositif de signalisation, sous la forme d'une surveillance électronique, qui fournit un signal à partir des couples détectés sur les entraînements ou à partir des changements ou variations de consommation de courant ou de puissance du dispositif d'entraînement en rotation (A1), lequel signal consiste en une alarme permettant d'émettre une indication relative à l'ampleur du déséquilibre et à la position du défaut de symétrie.

5. Système selon l'une des revendications 1 à 4, **caractérisé en ce que** le dispositif d'entraînement en rotation (A1) est conçu de manière à s'engager avec un moyeu ou un axe de rotation du tambour d'enroulement.

6. Système selon l'une des revendications 1 à 4, comportant en outre un dispositif de support du tambour d'enroulement qui est conçu de manière que les jantes (RK', RK") des joues de tambour (F1', F1") soient montées sur des galets (A1).

7. Système selon la revendication 6, **caractérisé en ce que** le dispositif d'entraînement en rotation se compose d'au moins un galet (A1) susceptible d'être entraîné en rotation, qui s'engage avec au moins une jante (RK', RK") d'une joue de tambour (F1', F").

8. Système selon la revendication 7, **caractérisé en ce qu'**au moins une jante (RK', RK") d'une joue de tambour (F1', F1") est dentée, profilée ou à bords lisses.
